# EUROPÄISCHE PATENTSCHRIFT

(11) **EP 2 054 688 B1**
(45) Veröffentlichungstag und Bekanntmachung des Hinweises auf die Patenterteilung: **17.03.2010**
(21) Anmeldenummer: 07788416.1
(22) Anmeldetag: 14.08.2007
(51) Int. Cl.: F27B 1/00, C04B 2/12

(54) **RINGSCHACHTOFEN**
ANNULAR SHAFT KILN
FOUR DROIT ANNULAIRE

(30) Priorität: 22.08.2006 DE 102006039204
(43) Veröffentlichungstag der Anmeldung: 06.05.2009
(73) Patentinhaber: Rheinkalk GmbH, 42489 Wülfrath (DE)
(72) Erfinder: SCHWERTMANN, Thomas, 42781 Haan (DE)
(74) Vertreter: Cohausz & Florack
(86) Internationale Anmeldenummer: PCT/EP2007/058399
(87) Internationale Veröffentlichungsnummer: WO 2008/022941

(56) Entgegenhaltungen:
- WO-A-82/02762
- DE-B- 1 181 613
- GB-A- 236 776
- K. BECKENBACH: "Das Kalkbrennen im Ringschachtofen" ZEMENT-KALK-GIPS, Nr. 5, 1970, Seiten 206-209,

## Beschreibung

Die Erfindung betrifft einen Ringschachtofen zum Brennen von körnigem Gut nach der "Beckenbach"-Bauart, insbesondere zum Brennen von Kalkstein oder Dolomit, umfassend einen Oberschacht zum Vorwärmen des körnigen Gutes und einen darunter angeordneten Hauptschacht mit einem axial angeordneten Innenzylinder zum Brennen und anschließenden Kühlen des körnigen Gutes.

Ringschachtöfen nach der "Beckenbach"-Bauart sind aus der Praxis seit Jahrzehnten bekannt. Sie gehen auf ein von Karl Beckenbach entworfenes Ringschachtofenkonzept zurück, welches in der DE-AS 1 281 111 dokumentiert ist. In einer gegenüber dem in dieser Druckschrift beschriebenen Ofen weiterentwickelten Ausführung, wie sie in Fig. 3 gezeigt ist und sehr weitgehend dem in den Fachaufsätzen "Das Kalkbrennen im Ringschachtofen" (K. Beckenbach in Zement-Kalk-Gips, 23. Jahrgang, 1970, Nr. 5, S. 206 - 209, Bild 1) und "Möglichkeiten der Energieeinsparung an verschiedenen Kalkschachtöfen, insbesondere am Ringschachtofen" (U. Beckenbach, P. Zeisel in Zement-Kalk-Gips, 35. Jahrgang, 1982, Nr. 6, S. 279 - 289, Bild 4) beschriebenen Ofenkonzept entspricht, werden der Oberschacht und der Hauptschacht gemeinsam durch einen äußeren feuerfest ausgekleideten Ofenmantel gebildet. Dabei ist im Hauptschacht ein unterer Innenzylinder und im Oberschacht ein oberer Innenzylinder angeordnet.

Im Betrieb dieses Ringschachtofens durchläuft das oberseitig aufgegebene Brenngut unter Wirkung der Schwerkraft zunächst den ringförmigen Oberschacht, wobei es im Gegenstrom durch aus der Brennzone des Hauptschachtes aufsteigende Abgase aufgeheizt wird. Anschließend tritt das vorgewärmte Brenngut in die Brennzone des Hauptschachtes ein. In deren oberem Bereich wird das Brenngut zunächst ebenfalls im Gegenstrom von den aus in einer oberen und einer unteren Ebene angeordneten Brennern austretenden Abgasen durchströmt, bevor es unterhalb der unteren Brennerebene im weiteren Verlauf im Gleichstrom durch von oben nach unten strömende Abgase weiter gebrannt wird. Durch das Brennen im Gleichstrom wird eine Überbrennung des Branntkalks wirksam verhindert, so dass dieser als Weichbrannt mit hoher Qualität und entsprechend hoher Reaktivität bei der Reaktion mit Wasser (Kalklöschen) den Ringschachtofen verlässt.

Ein Teil des Abgasstroms rezirkuliert als Umwälzgas, indem er am Ende der Brennzone zusammen mit einem Teil der aufsteigenden Kühlluft in den unteren Innenzylinder einströmt, dort wieder aufsteigt und über eine Ringleitung, die ihrerseits mit Injektoren für die Brenner der unteren Brennerebene verbunden ist, mit Hilfe eines vorgewärmten Treibluftstromes im Bereich der unteren Brennerebene wieder in den Schachtofen eingespeist wird. Schließlich tritt das gebrannte Gut in die Kühlzone des Hauptschachtes ein, wo es durch Kühlluft im Gegenstrom herunter gekühlt und anschließend aus dem Ringschachtofen ausgetragen wird.

Bei der vorstehend beschriebenen Konstruktion wird ein Teil der aus der Brennzone in die Vorwärmzone strömenden Abgase in den im Oberschacht angeordneten oberen Innenzylinder geleitet und gelangt durch diesen in einen Rekuperator. Dort wird der Abgasteilstrom zur Vorwärmung der Treibluft genutzt, die, wie oben beschrieben, im Gemisch mit dem genannten Umwälzgas über die Injektoren in die Brennkammern der unteren Brennerebene strömt. Der größte Teil der durch die Vorwärmzone des Oberschachts strömenden Abgase wird über ein Saugzuggebläse am oberen Rand der Vorwärmzone aus dem Ringschachtofen abgesaugt und als Ofenabgase in die Umgebung geblasen.

Die Verbrennung in den Brennern der oberen Brennerebene erfolgt stark unterstöchiometrisch, so dass das aus den oberen Brennkammern austretende Verbrennungsgas hohe Konzentration an CO und - im Falle des Einsatz kohlenwasserstoffhaltiger Brennstoffe, wie Erdgas oder Öl - H₂ enthält. Dieses Verbrennungsgas vermischt sich mit dem in der Brenngutschüttung von unten aufströmenden Gasstrom, welcher wiederum Sauerstoff im Überschuss enthält, so dass das in den Abgasen der oberen Brenner enthaltene CO und H₂ noch in der Brenngutschüttung zum großen Teil ausbrennt.

Wie Abgasmessungen gezeigt haben, ist jedoch der CO-Anteil und der Anteil weiterer Kohlenstoffverbindungen in den in die Außenluft abgeleiteten Abgasen des Ringschachtofens auch vor dem Hintergrund weiter verschärfter Emissionsgrenzwerte zu hoch.

Der Erfindung liegt daher die Aufgabe zugrunde, einen Ringschachtofen der eingangs genannten Art bereit zu stellen, dessen Abgase besonders niedrige Schadstoffkonzentrationen, insbesondere einen niedrigen CO-Gehalt, aufweisen.

Diese Aufgabe wird erfindungsgemäß mit einem Ringschachtofen gemäß dem Oberbegriff des Patentanspruches 1 dadurch gelöst, dass der Oberschacht einen gegenüber dem Hauptschacht reduzierten Innendurchmesser aufweist.

Die Reduzierung des Innendurchmessers des Oberschachtes, die sich geometrisch dadurch kennzeichnen lässt, dass die lichte Querschnittsfläche des Oberschachtes bevorzugt maximal 70 % der lichten Querschnittsfläche des Hauptschachtes beträgt, sorgt für eine entsprechend erhöhte Gasgeschwindigkeit im Oberschacht (Mindestleerrohrgasgeschwindigkeit im Oberschacht bevorzugt 0,6 m/s), was zu einer verbesserten Quervermischung des Abgasstromes in der Schüttung führt. Hierdurch kommt es unter anderem zu einem verbesserten Ausbrand des CO-Anteils im Abgas. Da der CO-Anteil als Indikator für eine Reihe weiterer schädlicher kohlenstoffhaltiger Emissionen dient, ist auch eine Reduktion dieser Emissionen als Folge der Verringerung des Innendurchmessers des Oberschachtes zu erwarten. Ein weiterer Vorteil der erfindungsgemäßen Lösung besteht in einer vereinfachten Beschickung des Ringschachtofens. So kann bei gegebener Korngrößenverteilung durch die Aufgabe des zu brennenden Gutes in einen Oberschacht mit reduziertem Innendurchmesser einer unerwünschten Entmischung des körnigen Gutes entgegengewirkt werden.

Ein weiterer Vorzug der erfindungsgemäßen Lösung liegt schließlich in einer signifikanten Reduktion des Feuerfestvolumens des Oberschachtes, was insbesondere bei dem Neubau eines Ofens zu einer spürbaren Senkung des Investitionsvolumens führt. Da bei den meisten bestehenden Ringschachtöfen die Vorwärmzone deutlich überdimensioniert ist, wirkt sich das reduzierte Oberschachtvolumen nicht negativ auf die Qualität des gebrannten Gutes aus. Durch die erhöhte Gasströmungsgeschwindigkeit steigt zwar der spezifische Druckverlust je Meter Schüttungshöhe. Da jedoch die Höhe der Vorwärmzone aufgrund der bisherigen Überdimensionierung problemlos reduziert sein kann, steigt der Gesamtdruckverlust der Vorwärmzone nur unwesentlich. Bei der Wahl der Länge der Vorwärmzone ist zu berücksichtigen, dass mit der erhöhten Strömungsgeschwindigkeit zwar einerseits der Druckverlust je Meter Schüttungslänge ansteigt, aber andererseits der konvektive Wärmeübergangskoeffizient zwischen Gas und Brenngut zunimmt. Druckverlust und Wärmeübergang sind eng gekoppelt, im Einzelnen hängt die Länge der Vorwärmzone auch vom Kornband des dem Ofen zugeführten Brenngutes ab.

Nach einer ersten vorteilhaften Ausgestaltung der Erfindung weist der Ringschachtofen einen Einfüllschacht zur Beschickung des Oberschachtes auf, wobei der Einfüllschacht einen gegenüber dem Oberschacht reduzierten Innendurchmesser aufweist. Durch den Einsatz eines Einfüllschachtes mit gegenüber dem Oberschacht weiter reduziertem Innendurchmesser gelingt eine noch entmischungsärmere Beschickung des Ringschachtofens.

Nach einer weiteren vorteilhaften Ausgestaltung der Erfindung ragt der Oberschacht des Ringschachtofens mit einem unteren Abschnitt in dessen Hauptschacht unter Ausbildung eines Ringkanals hinein. Vorzugsweise ist an dem Ringkanal wenigstens ein Abgasentnahmerohr vorgesehen, über welches Abgas aus dem Ringvolumen abziehbar ist. Das wenigstens eine Abgasentnahmerohr kann wiederum mit einer Rekuperatoreinheit zur Treibluftvorwärmung verbunden sein. Durch diese besonders zweckmäßige Weiterbildung der Erfindung kann der bei den meisten aus dem Stand der Technik bekannten Ringschachtöfen in der Vorwärmzone vorgesehene obere Innenzylinder vollständig entfallen. Neben einer dadurch vereinfachten Konstruktion des Ringschachtofens verbunden mit entsprechend reduzierten Investitionskosten ist der Entfall des oberen Innenzylinders auch schüttguttechnisch vorteilhaft. Bei vorhandenem oberen Innenzylinder kann sich nämlich die untere Eintrittsöffnung des oberen Innenzylinders im Oberschacht durch ein Aufwachsen von Ansätzen auf dem Innenzylinder im Hauptschacht verschließen. Die Beseitigung derartiger Ansätze erfordert einen Ofenstillstand, da die Ansätze in der Regel nur bei bis auf Höhe der Umwälzgasbrücken abgesenktem Schüttgutspiegel im Ofen entfernt werden können. Da über das wenigstens eine Abgasentnahmerohr lediglich ein Abgasteilstrom entnommen wird, ist es ausreichend, dass die effektive Querschnittsfläche des Ringkanals im Wesentlichen doppelt so groß ist wie die Querschnittsfläche des wenigstens einen Abgasentnahmerohres. Die effektive Querschnittsfläche wird hierbei oberseitig und seitlich durch die Wandbegrenzung des Ringkanals und unterseitig durch das sich vom Oberschacht in den Hauptschacht abböschende körnige Gut begrenzt.

Nach einer weiteren vorteilhaften Ausgestaltung der Erfindung weist der Ringkanal wenigstens eine Stocheröffnung auf. Hierdurch sind Reinigungsarbeiten während des laufenden Betriebes des Ringschachtofens möglich. Vorzugsweise sind mehrere Stocheröffnungen über den Umfang des Ringkanals verteilt vorgesehen, wobei wenigstens eine Stocheröffnung zwischen je zwei Umwälzgasbrücken angeordnet ist. Hierdurch bietet sich die Möglichkeit, die Gleichmäßigkeit des Absinkens der Brenngutschüttung im Ringspalt zu kontrollieren. Dies kann im einfachsten Fall visuell geschehen. Es können auch Rohre aus hitzebeständigem Stahl durch die Stocheröffnungen geführt (dazu sind z.B. Bohrungen in den Stopfen für die Stocheröffnungen vorzusehen) und die Absinkgeschwindigkeit dieser Rohre, die von der Brenngutschüttung mitgenommen werden und sich daher mit gleicher Geschwindigkeit wie das Brenngut bewegen, über z.B. zwei Stunden gemessen werden (danach werden die Rohre wieder gezogen). Das gleichmäßige Absinken der Brenngutschüttung über den Schachtquerschnitt ist für einen einwandfreien Ofenbetrieb von großer Bedeutung. Mit der genannten Methode können Fließstörungen des Brenngutes - z.B. verursacht durch Ansätze auf den Umwälzgasbrücken - besser lokalisiert werden, was deren effiziente Bekämpfung vereinfacht.

Der über die Entnahmerohre entnommene Teilgasstrom sollte nicht heißer als etwa 700 °C sein, da sonst Ansatzprobleme im Rekuperator zu stark werden können. Der in den Hauptschacht hineinragende untere Abschnitt des Oberschachts muss also dauerhaft für eine Temperatur von etwa 700 °C ausgelegt sein. Es kann daher sinnvoll sein, diesen Abschnitt, insbesondere seine ggf. vorhandene metallische Tragkonstruktion, zu kühlen, da er in Umfangsrichtung wirkende Druckkräfte (Brenngutschüttung) und Zugkräfte (Eigengewicht, Reibungskräfte zwischen Wand und Brenngutschüttung) aufnehmen muss. Dazu kann der in den Hauptschacht hineinragende Abschnitt als ein mit Feuerfestmaterial verkleidetes, mit Kühlluft durchströmbares Doppelstahlblech ausgebildet sein.

Um die Ansatzbildung auf dem vorzugsweise als Konusfläche ausgebildeten oberen Abschluss des Innenzylinder des Hauptschachtes weiter zu minimieren, ist es vorteilhaft, diese Konusfläche vergleichsweise stark abfallend auszubilden. Vorzugsweise weist die Konusfläche daher einen Neigungswinkel gegen die Vertikale von ≤ 30° auf, was einem vollen Konusöffnungswinkel von ≤ 60° entspricht.

Insbesondere bei Entfall des oberen Innenzylinders kann es zweckmäßig sein, im Oberschacht einen vorzugsweise zylindrischen Verdrängungskörper vorzusehen. Dadurch wird zum einen der Entmischungsneigung des Schüttgutes entgegengewirkt. Zum anderen ergibt sich so die Möglichkeit einen Abgasteilstrom zentral abzusaugen, d.h. insgesamt eine gleichmäßige Durchgasung der Brenngutschüttung in der Vorwärmzone zu erzielen.

Im Folgenden wird die Erfindung anhand einer Ausführungsbeispiele darstellenden Zeichnung näher erläutert. Es zeigen:
- Fig. 1: den oberen Abschnitt eines erfindungsgemäßen Ringschachtofens in einer Neubauvariante im schematisierten Längsschnitt,
- Fig. 2: den oberen Abschnitt eines erfindungsgemäßen Ringschachtofens in einer Umbauvariante im schematisierten Längsschnitt und
- Fig. 3: einen Ringschachtofen nach dem Stand der Technik im Längsschnitt.

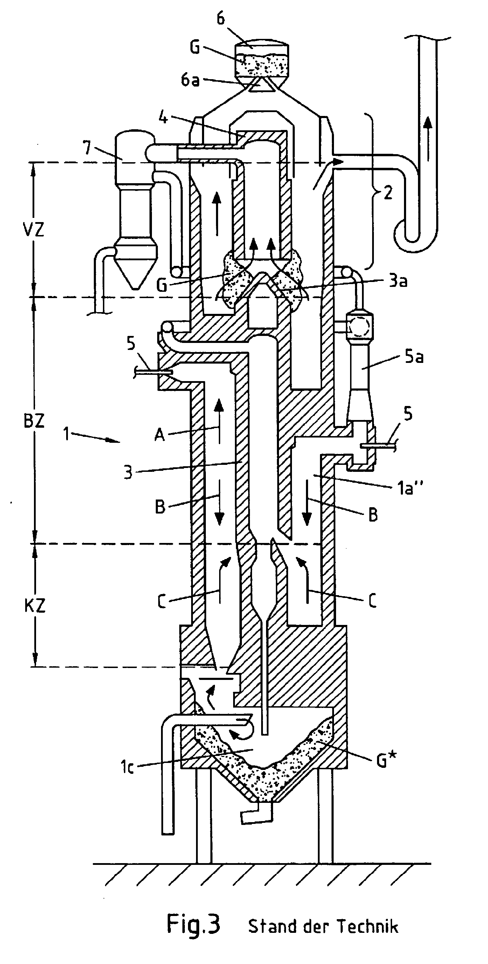

Der aus dem Stand der Technik bekannte Ringschachtofen der Bauart "Beckenbach" gemäß Fig. 3, welcher zum Zwecke des prinzipiellen Verständnisses zunächst beschrieben werden soll, weist einen zylindrischen Außenmantel auf, der sich in einen Oberschacht 2 sowie einen Hauptschacht 1 unterteilt. Die innere Schachtwand des Hauptschachtes 1 wird durch einen unteren Innenzylinder 3 gebildet, die des Oberschachtes durch einen oberen Innenzylinder 4. In der Brennzone sind eine Mehrzahl von Brennern 5 in einer oberen und einer unteren Brennerebene angeordnet. Vorliegend ist in jeder Brennerebene jeweils ein Brenner 5 dargestellt.

Im Betrieb des Ringschachtofens wird das zu brennende körnige Gut G, insbesondere Kalkstein oder Dolomit, über einen mit einer Kübelglocke 6a unterseitig verschließbaren Kübel 6 in den Ringschachtofen aufgegeben. Schwerkraftbedingt wandert das zu brennende Gut G zunächst durch die Vorwärmzone VZ, wo es im Gegenstrom durch aus der Brennzone BZ aufsteigende Abgase aufgeheizt wird. Sobald das Brenngut G den oberen Innenzylinder 4 passiert hat, böscht es in Richtung der konischen oberen Abschlusses 3a des unteren Innenzylinders 3 ab. Bei einem konventionellen Ringschachtofen des in Fig. 3 dargestellten Typs "Beckenbach" bilden sich hierbei mit zunehmender Betriebsdauer Ansätze auf der Konusfläche 3a, die bis zur unteren Öffnung des oberen Innenzylinders 4 aufwachsen und diese nach und nach verschließen können.

Das körnige Gut G wandert sodann in die Brennzone 1a, wo es zunächst im Gegenstrom (Pfeil A) und unterhalb der unteren Brennerebene im Gleichstrom (Pfeil B) gebrannt wird. Anschließend tritt das nunmehr gebrannte Gut G* in die Kühlzone KZ ein, wo es wiederum im Gegenstrom (Pfeil C) abgekühlt wird. Abschließend wird das gebrannte und abgekühlte Gut G* in der Austragzone 1c aus dem Ringschachtofen ausgetragen.

Wie in Fig. 3 erkennbar, strömt in der Vorwärmzone 2a des Oberschachtes ein Abgasteilstrom in den oberen Innenzylinder 4 ein und gelangt von dort in eine Rekuperatoreinheit 7, wo er einen Treibluftstrom erwärmt, welcher die Injektoren 5a der Brenner 5 der unteren Brennerebene zusammen mit einem über den unteren Innenzylinder 3 und eine mit den Injektoren 5a verbundene Ringleitung rezirkulierenden Abgasteilstrom speist.

Die Auswertung von Wärmeübertragungsrechnungen zeigt, dass das Schüttgutvolumen der Vorwärmzone 2a und damit des Oberschachts 2 von Ringschachtöfen der vorstehend beschriebenen Art deutlich überdimensioniert ist. Ferner ist der Schadstoffanteil, insbesondere der Anteil von Kohlenmonoxid und weiterer kohlenstoffhaltiger Verbindungen, im Abgas dieser Ringschachtöfen zu hoch.

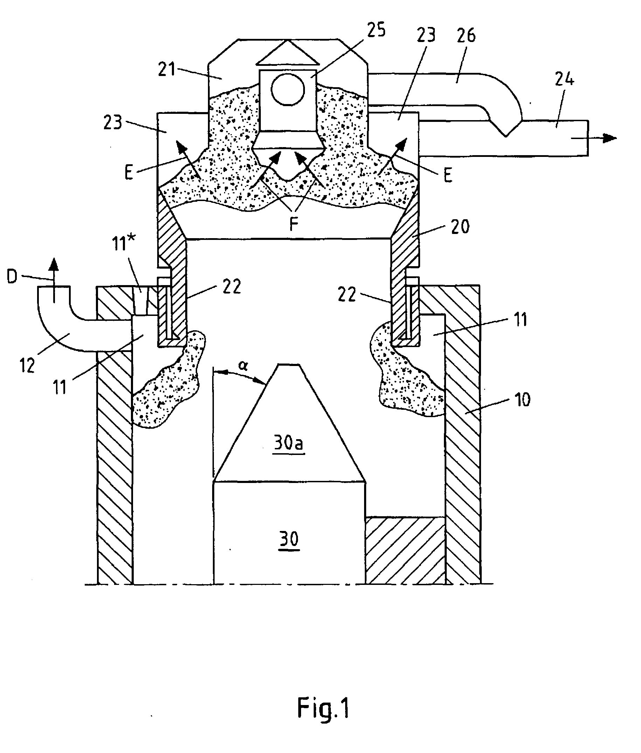

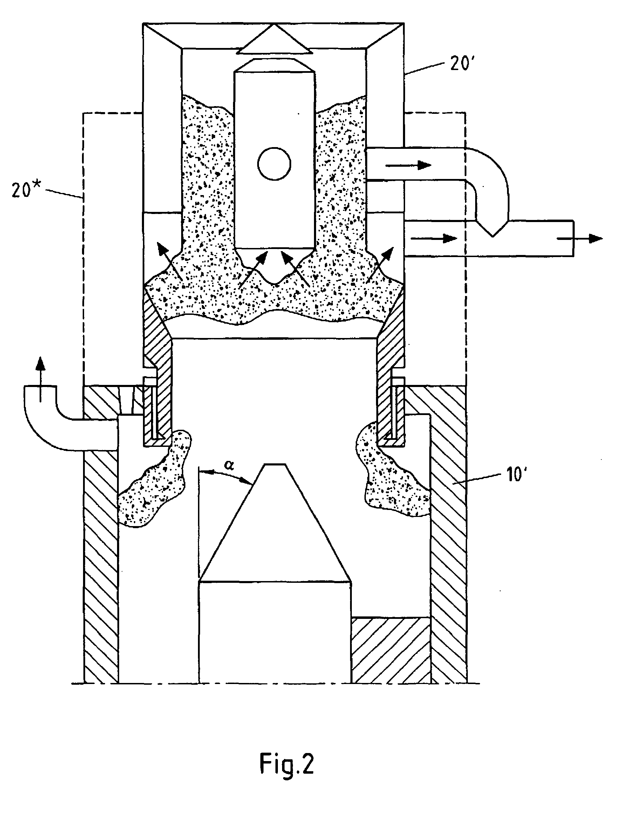

In den Fig. 1 und 2 ist nun der obere Bereich eines erfindungsgemäßen Ringschachtofens der "Beckenbach"-Bauart in einer Neubauvariante sowie in einer Umbauvariante schematisch dargestellt.

Der Ringschachtofen der Fig. 1 umfasst einen Oberschacht 20 mit einem erfindungsgemäß gegenüber dem Hauptschacht 10 des Ringschachtofens reduzierten Innendurchmesser. Der entsprechend dem reduzierten Innendurchmesser verringerte Oberschachtquerschnitt führt zu einer erhöhten Gasgeschwindigkeit, was wiederum eine verbesserte Quervermischung des Abgasstromes in der Schüttung des zu brennenden Gutes bewirkt. Hierdurch kommt es unter anderem zu einem verbesserten Ausbrand des Kohlenmonoxidanteils im Abgas. Auch wird die Beschickung des Ringschachtofens durch den erfindungsgemäß verringerten Innendurchmesser des Oberschachts vereinfacht, da einer unerwünschten Entmischung des Schüttgutes entgegengewirkt werden kann. Der Ringschachtofen gemäß Fig. 1 umfasst hierzu ferner einen Einfüllschacht 21, welcher gegenüber dem Oberschacht 20 einen weiter reduzierten Innendurchmesser aufweist, was eine noch entmischungsärmere Beschickung des Ringschachtofens ermöglicht.

Vorliegend ist der Oberschacht 20 des Ringschachtofens derart ausgebildet, dass er mit einem unteren Abschnitt 22 in den Hauptschacht 10 unter Ausbildung eines Ringkanals 11 hineinragt. Dieses Ringvolumen 11 bietet die Möglichkeit der Entnahme eines Abgasteilstroms zur Vorwärmung der Treibluft in einem Rekuperator (vgl. Fig. 3). Hierzu sind an dem Ringkanal 11 zwei Abgasentnahmerohre 12 (zweites Abgasentnahmerohr nicht dargestellt in Fig. 1) angesetzt. Da nur ein Abgasteilstrom (Pfeil D) entnommen wird, ist es ausreichend, dass die effektive Querschnittsfläche des Ringkanals 11 im Wesentlichen doppelt so groß ist wie die Gesamtquerschnittsfläche der beiden Abgasentnahmerohre 12, was unter konstruktiven Gesichtspunkten vorteilhaft ist. Die effektive Querschnittsfläche wird hierbei oberseitig und seitlich durch die Wandbegrenzung des Ringkanals 11 und unterseitig durch das sich vom Oberschacht in den Hauptschacht abböschende körnige Gut (ausschnittsweise dargestellt) begrenzt.

Der in den Hauptschacht 10 hineinragende Abschnitt 22 des Oberschachtes 20 ist vorzugsweise kühlbar ausgebildet. Vorliegend ist er als ein mit Feuerfestmaterial verkleidetes, mit Kühlluft durchströmbares Doppelstahlblech ausgeführt. Ferner sind bei dem erfindungsgemäßen Ringschachtofen gemäß Fig. 1 an dem Ringkanal 11 mehrere über den Umfang des Ringkanals verteilt angeordnete Stocheröffnungen 11* vorgesehen, wobei wenigstens eine Stocheröffnung zwischen je zwei Umwälzgasbrücken angeordnet ist. Durch diese können Reinigungsarbeiten während des laufenden Betriebs des Ringschachtofens problemlos durchgeführt werden, so dass ein Zuwachsen der zum Rekuperator.führenden Abgasentnahmerohre 12 sicher unterbunden werden kann. Ein weiterer Vorteil besteht in der Möglichkeit, die Gleichmäßigkeit des Absinkens der Brenngutschüttung im Ringspalt zu kontrollieren, was im einfachsten Fall visuell geschehen kann.

Der aus dem Hauptschacht 10 in den Oberschacht einströmende Abgasstrom strömt in ein weiteres zwischen dem Oberschacht 20 und dem in den Oberschacht 20 hineinragenden Einfüllschacht 21 gebildetes Ringvolumen 23 und von dort in eine Hauptabgasleitung 24 (Pfeil E). Ein weiterer Abgasteilstrom (Pfeil F) strömt in einen in dem Einfüllschacht 21 axial angeordneten, als oberseitig geschlossenes Rohrstück ausgebildeten Verdrängungskörper 25. Von dort strömt der Abgasteilstrom in eine weitere Abgasleitung 26, die außerhalb des Oberschachts 20 in die Hauptabgasleitung 24 mündet.

Wie in Fig. 1 erkennbar, ist im Hauptschacht 10 des Ringschachtofens wiederum ein Innenzylinder mit konischem oberen Abschluss 30a vorgesehen. Vorliegend weist der Konus einen Neigungswinkel gegen die Vertikale von α ≤ 30° auf, was einem vollen Konusöffnungswinkel von ≤ 60° entspricht. Durch das entsprechend starke Gefälle wird die Gefahr der Ansatzbildung auf der Konusfläche weiter minimiert.

In Fig. 2 ist nun eine weitere Ausführungsform des erfindungsgemäßen Ringschachtofens dargestellt. Bei dieser Ausführungsform ist ein bestehender Ringschachtofen herkömmlicher Bauart (vgl. Fig. 3) mit einem neuen, erfindungsgemäß ausgebildeten Oberschacht 20' mit reduziertem Innendurchmesser versehen. Der weiterhin bestehende Schachtmantel des alten Oberschachtes 20* ist hierbei mit gestrichelten Linien dargestellt. Im Übrigen unterscheidet sich die in Fig. 2 dargestellte Konstruktion nicht wesentlich von der in Fig. 1 dargestellten.

## Patentansprüche

1. Ringschachtofen zum Brennen von körnigem Gut (G) nach der "Beckenbach"-Bauart, insbesondere zum Brennen von Kalkstein oder Dolomit, umfassend einen Oberschacht (20, 20') zum Vorwärmen des körnigen Gutes (G) und einen darunter angeordneten Hauptschacht (10, 10') mit einem axial angeordneten Innenzylinder (30) zum Brennen und anschließenden Kühlen des körnigen Gutes, wobei das Brenngut im Oberschacht (20, 20') im Gegenstrom aufgeheizt wird und in der Brennzone des Hauptschachtes (10, 10') zunächst im Gegenstrom und anschließend im Gleichstrom gebrannt wird,
**daduruch gekennzeichnet, dass**
der Oberschacht (20, 20') einen gegenüber dem Hauptschacht (10, 10') reduzierten Innendurchmesser aufweist.

2. Ringschachtofen nach Anspruch 1,
**dadurch gekennzeichnet, dass**
der Ringschachtofen einen Einfüllschacht (21) zur Beschickung des Oberschachtes (20) aufweist, wobei der Einfüllschacht einen gegenüber dem Oberschacht (20) reduzierten Innendurchmesser aufweist.

3. Ringschachtofen nach Anspruch 1 oder 2,
**dadurch gekennzeichnet, dass**
der Oberschacht (20, 20') mit einem unteren Abschnitt (22) in den Hauptschacht (10, 10') unter Ausbildung eines Ringkanals (11) hineinragt.

4. Ringschachtofen nach Anspruch 3,
**dadurch gekennzeichnet, dass**
an dem Ringkanal (11) wenigstens ein Abgasentnahmerohr (12) vorgesehen ist, über welches Abgas aus dem Ringvolumen (11) abziehbar ist.

5. Ringschachtofen nach Anspruch 4,
**dadurch gekennzeichnet, dass**
das wenigstens eine Abgasentnahmerohr (12) mit einer Rekuperatoreinheit zur Treibluftvorwärmung verbunden ist.

6. Ringschachtofen nach Anspruch 4 oder 5,
**dadurch gekennzeichnet, dass**
die effektive Querschnittsfläche des Ringkanals (11) im wesentlichen doppelt so groß ist wie die Querschnittsfläche des wenigstens einen Abgasentnahmerohrs (12).

7. Ringschachtofen nach einem der Ansprüche 3 bis 6,
**dadurch gekennzeichnet, dass**
der Ringkanal (11) wenigstens eine Stocheröffnung (11*) aufweist.

8. Ringschachtofen nach Anspruch 7,
**dadurch gekennzeichnet, dass**
mehrere Stocheröffnungen (11*) über den Umfang des Ringkanals (11) verteilt vorgesehen sind, wobei wenigstens eine Stocheröffnung (11*) zwischen je zwei Umwälzgasbrücken angeordnet ist.

9. Ringschachtofen nach einem der Ansprüche 3 bis 8,
**dadurch gekennzeichnet, dass**
der in den Hauptschacht (10, 10') hineinragende Abschnitt (22) des Oberschachtes (20, 20') kühlbar ausgebildet ist.

10. Ringschachtofen nach einem der Ansprüche 3 bis 9,
**dadurch gekennzeichnet, dass**
der in den Hauptschacht (10, 10') hineinragende Abschnitt des Oberschachtes (22) als ein mit Feuerfestmaterial verkleidetes, mit Kühlluft durchströmbares Doppelstahlblech ausgebildet ist.

11. Ringschachtofen nach einem der Ansprüche 1 bis 10,
**dadurch gekennzeichnet, dass**
der obere Abschluss des Innenzylinders (30) als Konusfläche (30a) ausgebildet ist, wobei die Konusfläche (30a) einen Öffnungswinkel (α) ≤ 30° aufweist.

12. Ringschachtofen nach einem der Ansprüche 1 bis 11,
**dadurch gekennzeichnet, dass**
der in dem Oberschacht (20, 20') ein Verdrängungskörper (25) angeordnet ist.

13. Ringschachtofen nach einem der Ansprüche 1 bis 12,
**dadurch gekennzeichnet, dass**
der Verdrängungskörper (25) als oberseitig geschlossenes Rohrstück ausgebildet ist.

## Claims

1. An annular shaft kiln of the "Beckenbach"-type for calcining granular material (G), in particular for calcining limestone or dolomite, comprising an upper shaft (20, 20') for preheating the granular material (G) and a main shaft (10, 10') arranged thereunder, with an axially arranged inner cylinder (30) for burning and subsequently cooling the granular material, wherein the material to be burned is heated in the upper shaft (20, 20') in counterflow and is burned first in the burning zone of the main shaft (10, 10') in counterflow and subsequently burned in cocurrent flow,
**characterized in that**
the upper shaft (20, 20') has a reduced inner diameter in comparison to the main shaft (10, 10').

2. The annular shaft kiln according to claim 1,
**characterized in that**
the annular shaft kiln has a filling shaft (21) for loading the upper shaft (20), wherein the filling shaft has a reduced inner diameter in comparison to the upper shaft (20).

3. The annular shaft kiln according to claim 1 or claim 2,
**characterized in that**
the upper shaft (20, 20') projects with a lower section (22) into the main shaft (10, 10'), thereby forming a ring channel (11).

4. The annular shaft kiln according to claim 3,
**characterized in that**
at the ring channel (11) at least one exhaust gas discharge pipe (12) is provided, by means of which exhaust gas can be vented from the ring volume (11).

5. The annular shaft kiln according to claim 4,
**characterized in that**
at least one exhaust gas discharge pipe (12) is connected with a recuperator unit for preheating propellant air.

6. The annular shaft kiln according to claim 4 or claim 5,
**characterized in that**
the effective cross sectional area of the ring channel (11) is substantially twice as big as the cross sectional area of the at least one exhaust gas discharge pipe (12).

7. The annular shaft kiln according to any one of the claims 3 to 6,
**characterized in that**
the ring channel (11) has at least one pokehole (11*).

8. The annular shaft kiln according to claim 7,
**characterized in that**
a plurality of pokeholes (11*) are provided distributed over the circumference of the ring channel (11), wherein at least one pokehole (11*) is arranged between each of two recirculation gas bridges.

9. The annular shaft kiln according to any one of the claims 3 to 8,
**characterized in that**
the upper shaft's (20, 20') section (22) projecting into the main shaft (10, 10') is formed coolable.

10. The annular shaft kiln according to any one of the claims 3 to 9,
**characterized in that**
the upper shaft's section (22) projecting into the main shaft (10, 10') is formed as a double steel sheet which is covered with refractory material and through which cooling air can flow.

11. The annular shaft kiln according to any one of the claims 1 to 10,
**characterized in that**
the upper ending of the inner cylinder (30) is formed as taper face (30a), wherein the taper face (30a) has an opening angle (α) ≤ 30°.

12. The annular shaft kiln according to any one of the claims 1 to 11,
**characterized in that**
a displacer (25) is arranged within the upper shaft (20, 20').

13. The annular shaft kiln according to any one of the claims 1 to 12,
**characterized in that**
the displacer (25) is formed as a pipe section which is closed on the upper side.

## Revendications

1. Four vertical annulaire pour la calcination de matériau granulé (G), selon le mode de construction "Beckenbach", en particulier pour la calcination de calcaire ou de dolomie, comprenant un compartiment supérieur (20, 20') pour le préchauffage du matériau granulé (G) et, disposé sous celui-ci, un compartiment principal (10, 10') avec un cylindre intérieur (30), disposé axialement, pour la calcination et le refroidissement adjacent du matériau granulé, le matériau à calciner étant chauffé dans le compartiment supérieur (20, 20') à contre-courant, et calciné dans la zone de combustion du compartiment principal (10, 10'), d'abord en contre-courant et ensuite en courant parallèle, **caractérisé en ce que** le compartiment supérieur (20, 20') présente un diamètre intérieur réduit par rapport au compartiment principal (10, 10').

2. Four vertical annulaire selon la revendication 1, **caractérisé en ce que** le four vertical annulaire présente un compartiment de remplissage (21) pour l'alimentation du compartiment supérieur (20), le compartiment de remplissage présentant un diamètre intérieur réduit par rapport au compartiment supérieur (20).

3. Four vertical annulaire selon revendication 1 ou 2, **caractérisé en ce que** le compartiment supérieur (20, 20') fait saillie dans le compartiment principal (10, 10'), avec une section inférieure (22), en formant un canal annulaire (11).

4. Four vertical annulaire selon la revendication 3, **caractérisé en ce que**, sur le canal annulaire (11), est prévu au moins un tube de prélèvement de gaz brûlés (12), par l'intermédiaire duquel du gaz brûlé peut être soutiré de l'espace annulaire (11).

5. Four vertical annulaire selon la revendication 4, **caractérisé en ce qu'**au moins un tube de décharge de gaz brûlés (12) est relié à une unité de récupération pour le préchauffage de l'air de soufflage.

6. Four vertical annulaire selon revendication 4 ou 5, **caractérisé en ce que** la surface de la section transversale effective du canal annulaire (11) est sensiblement deux fois plus grande que la surface de la section transversale du tube de prélèvement de gaz brûlés (12) au moins prévu.

7. Four vertical annulaire selon l'une des revendications 3 à 6, **caractérisé en ce que** le canal annulaire (11) présente au moins un regard (11*).

8. Four vertical annulaire selon la revendication 7, **caractérisé en ce que** sont prévus plusieurs regards (11*), qui sont répartis sur le pourtour du canal annulaire (11), au moins l'un des regards (11*) étant disposé entre deux arches de gaz de recirculation.

9. Four vertical annulaire selon l'une des revendications 3 à 8, **caractérisé en ce que** la section (22) du compartiment supérieur (20, 20'), qui fait saillie dans le compartiment principal (10, 10'), est conçue de manière à pouvoir être refroidie.

10. Four vertical annulaire selon l'une des revendications 3 à 9, **caractérisé en ce que** la section (22) du compartiment supérieur, qui fait saillie dans
le compartiment principal (10, 10'), est réalisée sous la forme d'une double tôle d'acier, qui, revêtue avec une matière réfractaire, peut être traversée par un flux d'air de refroidissement.

11. Four vertical annulaire selon l'une des revendications 1 à 10, **caractérisé en ce que** la partie terminale, supérieure du cylindre intérieur (30) est réalisée en tant que surface conique (30a), laquelle surface conique (30a) présente un angle d'ouverture (α) de ≤ 30 °.

12. Four vertical annulaire selon l'une des revendications 1 à 11, **caractérisé en ce que**, dans le compartiment supérieur (20, 20'), est installé un corps de refoulement (25).

13. Four vertical annulaire selon l'une des revendications 1 à 12, **caractérisé en ce que** le corps de refoulement (25) est réalisé sous la forme d'une pièce tubulaire fermée sur le côté supérieur.
